# EUROPEAN PATENT APPLICATION

(11) **EP 0 827 086 A2**
(43) Date of publication of application: **04.03.1998**
(21) Application number: 97114608.9
(22) Date of filing: 22.08.1997
(51) Int. Cl.: G06F 15/78

(54) **Semiconductor integrated circuit**

(30) Priority: 26.08.1996 JP 223856/96
(71) Applicant: NEC CORPORATION, Tokyo (JP)
(72) Inventor: Ishibashi, Takashi, c/o NEC Corporation, Tokyo (JP)
(74) Representative: Baronetzky, Klaus, Dipl.-Ing.

(57) **Abstract**

A semiconductor integrated circuit is described which has a central processing unit 1, a plurality of devices, and loop-shaped buses 6 and 7 to which the central processing unit and the plurality of devices are connected; and moreover, which has bus buffer circuits 11, 12, and 13 at at least two locations on the bus that each have the capability of electrically opening and closing the bus connections; wherein the opening and closing of the bus buffer circuits is controlled by a bus buffer control circuit 10 that inputs control information outputted from the central processing unit or the plurality of devices and generates buffer control signals. Accordingly, in a semiconductor integrated circuit having a plurality of devices which have input and output with respect to the same bus, the electrical power consumption of a bus having a heavy load can be decreased without also decreasing the operation speed.

## Description

### BACKGROUND OF THE INVENTION

### 1. Field of the Invention:

The present invention relates to a semiconductor integrated circuit.

### 2. Description of the Related Art:

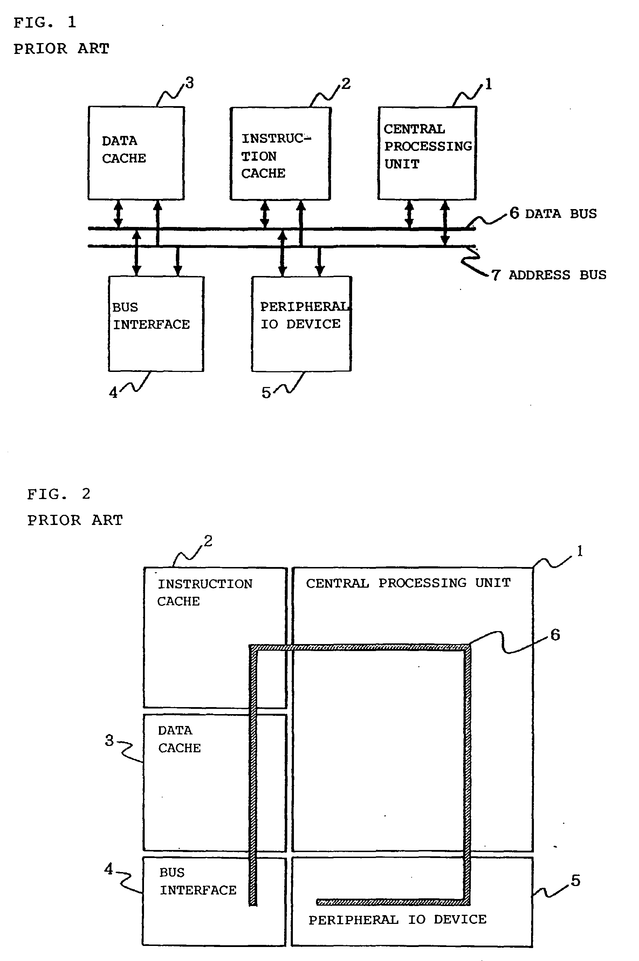

An explanation of the prior art will first be presented with reference to the accompanying figures. Fig. 1 is a block diagram of a semiconductor integrated circuit of the prior art, this example being a RISC microcomputer made up of central processing unit 1, instruction cache 2, data cache 3, bus interface 4, and peripheral input/output devices such as a timer or serial interface. These components are connected by way of data bus 6 and address bus 7.

Regarding the operation of this circuit, central processing unit 1 first sends an instruction address to instruction cache 2 by means of address bus 7, and if the sent instruction address makes a cache hit, instruction cache 2 sends the corresponding instruction code to central processing unit 1 by means of data bus 6. Central processing unit 1 then decodes the sent instruction code and carries out processing in accordance with the instruction.

For example, in the case of a "compute" instruction, data of a register within central processing unit 1 designated by the instruction code are processed by an arithmetic circuit within central processing unit 1 and stored in the register within central processing unit 1 designated by the instruction code.

Alternatively, in the case of a "load" instruction, central processing unit 1 calculates the data address of the load destination from the instruction code, and if this data address is an address corresponding to the main storage of the cache memory region, sends the data address of the load destination to data cache 3 by means of address bus 7; and if a cache hit is made, central processing unit 1 receives load data from cache 3 by way of data bus 6 and stores the load data in the register within central processing unit 1 designated by the instruction code. In the case of a "store" instruction, central processing unit 1 calculates the data address of the store destination from the instruction code and, if this data address is an address corresponding to the main storage, sends to data cache 3 either the data address by way of address bus 7 or the data to be stored by way of data bus 6; but in the event of a cache hit, data cache 3 stores the sent store data.

If the destination of "load" or "store" is an external memory space or an external input/output device of a non-cache region, the same processing is carried out as when data cache 3 makes a hit with respect to bus interface circuit 4; and if the destination is an incorporated peripheral I/O device 5, the same process is carried out as when data cache 3 makes a hit with respect to incorporated peripheral I/O device 5.
If no hits are made in instruction cache 2 or data cache 3, central processing unit 1 halts normal instruction execution and carries out replacement of the cache by placing new instruction code or data from external memory directly into the cache by way of bus interface circuit 4 and data bus 6 and not by way of the central processing unit.

In this example of the prior art, an instruction address, which is the address of an instruction to fetch, and data addresses in "load" and "store" instructions are present in addresses outputted to address bus 7. In addition, instruction code and data to be loaded and stored are present in data outputted to data bus 6. The use of separate buses for each of these two types, addresses and data, can be considered, but because bus wiring takes up a great deal of space in microcomputers having a wide bus, multiplexing the two types of address and data on a single bus can also be considered. However, a multiplex bus results in a corresponding increase in the number of elements that input from the bus and bus drive circuits connected to the bus, and a consequent increase in the load capacity of the bus line. Moreover, RISC microcomputers normally carry out the processing of each instruction by means of a pipeline architecture whereby, for example, instruction code about to enter the instruction decode stage and load and store data in the memory access stage must both be placed on the data bus within the same clock. If two data are to placed on the data bus within one clock, only one-half clock is available for outputting each data, and this requires an extremely fast bus speed. Speeding up a bus having great load capacity entails an increase in the dimensions of the bus driver, and this in turn results in even greater load capacity and high power consumption by the bus.

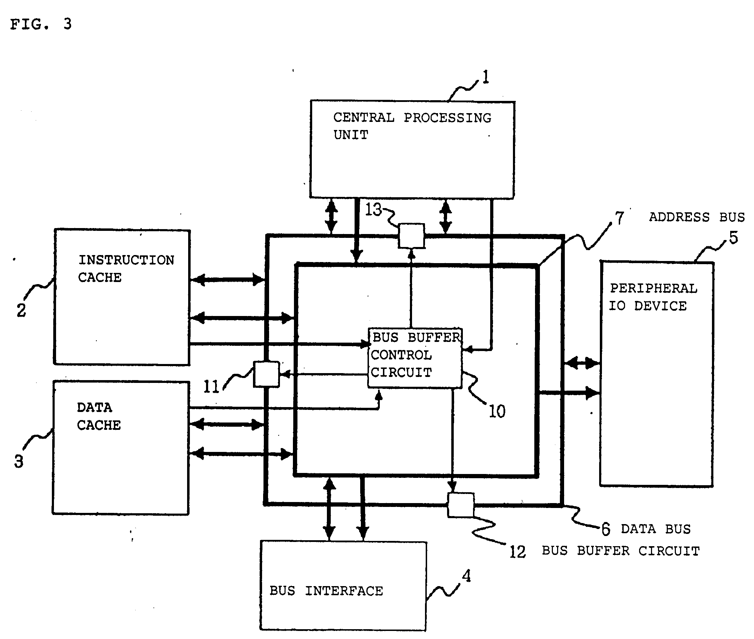

Fig. 2 is a schematic view of a mask pattern for a RISC microcomputer according to the above-described prior art. As shown in Fig. 1, data bus 6 inputs and outputs for all functional blocks, and as a result, the data bus makes nearly a complete circuit of the chip. Table 1 shows which devices output information and which devices receive information using data bus 6.

**[Table 1]**

| data bus 6 | output | input |
|---|---|---|
| instruction code | instruction cache 2 | central processing unit 1 |
| load data | data cache 3 | central processing unit 1 |
| | peripheral IO device 5 | |
| | bus interface 4 | |
| store data | central processing unit 1 | data cache 3 |
| | | peripheral IO device 5 |
| | | bus interface 4 |
| cache replace data | bus interface 4 | instruction cache 2 |
| | | data cache 3 |

As can be seen from Fig. 2 and Table 1, when transmitting instruction code, for example, the entire capacity of data bus 6 must be driven when sending instruction code from instruction cache 2 to central processing unit 1 because data bus 6 is not divided.

One conceivable means of eliminating this problem is to arrange the bus in a loop configuration and provide interspaced gates for opening and closing the bus. An example of the prior art that resembles this method is described in Japanese Patent Laid-open No. 157959/90. According to this invention, a plurality of gates are provided that electrically open and close all paths existing between each of a central processing unit, main storage device, and input/output devices on a data bus, and opening and closing of this plurality of gates is controlled in accordance with information obtained from the central processing unit, the aim of this invention being to enable simultaneous data transmission between the plurality of devices. This example of the prior art, however, has the drawback that, since gates are provided between all of the devices, delay at the gates when data are transmitted and received across the plurality of gates causes transmission speed to drop.

As described hereinabove, in semiconductor integrated circuits of the prior art, and particularly in high-performance RISC microcomputers having a large bit width, a multiplex bus architecture is frequently adopted as a means of reducing the area on the chip taken up by bus wiring. Such a configuration, however, results in increased load capacity due to the plurality of devices connected on the same bus. In addition, when a multiplex bus architecture is adopted, two types of data must be transmitted in one clock, one type in each half-clock, in order to prevent disorder in the pipeline, and as a result, high bus speed is required. Such a configuration therefore entails the drawback of high power consumption by the bus to drive the heavy load capacity of the bus at high speed.

One configuration that can be considered as a solution to these problems involves connecting the bus in a loop form and providing gates on the bus that can electrically open and close the bus. However, with gates that merely open and close, access across the gates results in the problem of a drop in bus speed.

### SUMMARY OF THE INVENTION

The object of the present invention is to reduce electrical power consumption for a bus carrying a heavy load without causing a drop in operation speed.

This object can be achieved by the construction of the present invention as described hereinbelow. The semiconductor according to the present invention:
is provided with a central processing unit and a plurality of devices, the central processing unit and the plurality of devices being connected to the same bus which is of loop configuration;
and includes, at at least two locations on the bus, bus buffer circuits which have the function of allowing electrical opening and closing and which are not arranged between all of the plurality of devices;
   wherein the opening and closing of the bus buffer circuits is controlled by a bus buffer control circuit that inputs control information outputted by the central processing unit or the plurality of devices and generates bus buffer control signals.

Furthermore, the bus buffer circuits each include bus drive circuits BD1 and BD2 for each end of the bus to which the bus buffer circuits are connected. In addition, the bus buffer circuits input at least two control signals CNT1 and CNT2 from the bus buffer control circuit.

The semiconductor integrated circuit of the present invention also includes bus buffer circuits characterized in that CNT1, at the active edge side of CNT1, is inputted to a delay pulse generating circuit, which enters a larger delay, the OR logic output of the output of the delay pulse generating circuit and CNT2 becoming the control signal of BD2; and CNT2, at the active edge side of CNT2, is inputted to delay pulse generating circuit, which enters a larger delay, the OR logic output of the output of the delay pulse generating circuit and CNT1 becoming the control signal of BD1.

The above and other objects, features, and advantages of the present invention will become apparent from the following description based on the accompanying drawings which illustrate examples of preferred embodiments of the present invention.

### BRIEF DESCRIPTION OF THE DRAWINGS

Fig. 1 is a block diagram showing one example of a semiconductor integrated circuit of the prior art.

Fig. 2 is a schematic diagram showing a mask pattern of one example of a semiconductor integrated circuit of the prior art.

Fig. 3 is a block diagram showing one embodiment of the semiconductor integrated circuit of the present invention.

Fig. 4 is a schematic diagram showing a mask pattern of one embodiment of the semiconductor integrated circuit of the present invention.

Fig. 5 is a circuit diagram showing an embodiment of the bus buffer circuit.

Fig. 6 is a timing chart of the bus buffer circuit.

Fig. 7 is a circuit diagram showing another embodiment of the bus buffer circuit.

### DETAILED DESCRIPTION OF THE PREFERRED EMBODIMENTS

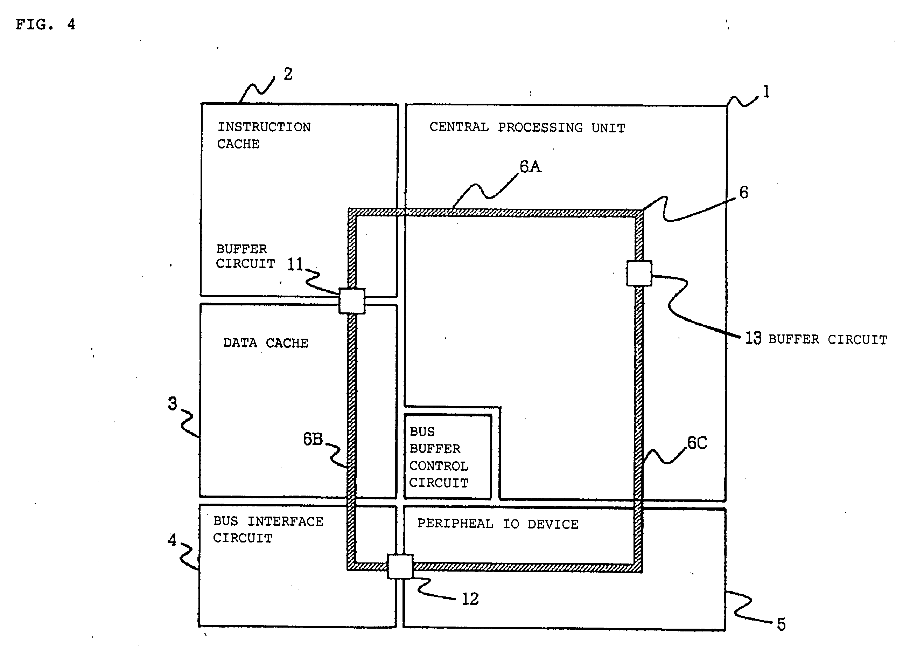

An embodiment of the present invention will next be explained with reference to the accompanying figures. Fig. 3 is a block diagram showing an embodiment of the semiconductor integrated circuit of the present invention, which is one type of RISC microcomputer. This embodiment comprises: central processing unit 1; instruction cache 2, which is a circuit functional block; data cache 3; bus interface 4; and peripheral I/O device 5 such as a timer or serial interface; each of these components being connected by means of data bus 6 and address bus 7, which are in loop form. This embodiment further includes bus buffer circuits 11, 12, and 13 on data bus 6; bus buffer circuits 11, 12, and 13 being controlled by the output of bus buffer control circuit 10, which in turn takes as input signals outputted from central processing unit 1, instruction cache 2, and data cache 3. Fig. 4 is a schematic diagram of the mask patterns of Fig. 3.

The basic operation of this embodiment as a microcomputer is equivalent to that of the prior-art example described using Fig. 1. Consequently, explanation will here be limited to the operation relating to data bus 6, bus buffer circuits 11, 12, and 13, and bus buffer control circuit 10 during the transmission and reception of data between each of the components.

The transmission and reception of data between each of the components by means of data bus 6 is presented in Table 1, and the operation of bus buffer circuits 11, 12, and 13 and bus buffer control circuit 10 at this time is as shown in Table 2. Here, 6A, 6B, and 6C in Fig. 4 identify each of the parts of data bus 6 divided by bus buffer circuits 11, 12, and 13. For central processing unit 1, the input of instruction code is connected to data bus 6A, and the input of load data and the output of store data are connected to data bus 6B.

For example, central processing unit 1 outputs an instruction address to instruction cache 2 by way of address bus 7. Bus buffer control circuit 10 is simultaneously notified of the instruction "fetch" request. Instruction code is next outputted from instruction cache 2 to central processing unit 1, whereupon bus buffer circuits 11 and 13 enter an OFF state. The load of data bus driven by instruction cache 2 is only the load of data bus 6A between bus buffer circuits 11 and 13. As for transmission of data between other components, as shown in Table 2, controlling the bus buffer circuits eliminates the need to drive the entire load of encircling data bus 6, thereby greatly decreasing power consumption by the bus.

**[table 2]**

| | | | bus buffer | | | data bus |
|---|---|---|---|---|---|---|
| data bus 6 | output | input | 11 | 12 | 13 | |
| instruction code | instruction cache 2 | central processing unit 1 | OFF | x | OFF | 6A |
| load data | data cache 3 | central processing unit 1 | OFF | ON | OFF | 6B - 6C |
| | peripheral IO device 5 | | x | OFF | OFF | 6C |
| | bus interface 4 | | OFF | ON | OFF | 6B - 6C |
| store data | central processing unit 1 | data cache 3 | OFF | ON | OFF | 6B - 6C |
| | | peripheral IO device 5 | x | OFF | OFF | 6C |
| | | bus interface 4 | OFF | ON | OFF | 6B - 6C |
| cache replace data | bus interface 4 | instruction cache 2 | ON | OFF | OFF | 6A - 6B |
| | | data cache 3 | OFF | OFF | x | 6A - 6B |

Here, as in the known example of Japanese Patent Laid-open No. 157959/90, a case is considered in which bus buffer circuits are arranged between all of the components. In a case in which bus buffer circuits are arranged between all of the components, for the transmission and reception of data between devices arranged close to each other, delay of data caused by the bus buffer circuits does not present a problem, and data can be simultaneously transmitted between a plurality of devices if the division of the bus wiring is closely controlled. For data transmitted between devices that are arranged at a distance, however, data must be transmitted by way of a plurality of bus buffer circuits, causing the operating speed of the bus to lag behind, and in order to speed transmission, bringing about the need to raise the drive capability of the bus drive circuit or the bus buffer circuit, thereby preventing any reduction in power consumption through division of the bus.

For this reason, arrangement of bus buffer circuits between devices that are frequently accessed is counterproductive. Normally, when using a microprocessor having an incorporated cache, the hit rate of the cache is 90% or greater, and in the case of a RISC processor that executes nearly all instructions in one clock by pipeline architecture, the transmission of instruction code from instruction cache 2 to central processing unit 1 occurs at substantially every clock. Thus, in the case of this embodiment, it is clear that a better effect can be obtained by not arranging a bus buffer circuit between instruction cache 2 and central processing unit 1.

In addition, as explained hereinabove, the present embodiment is of a construction in which the input and output of data to be loaded or stored from bus 6B is effected after fetching instruction code of central processing unit 1 from bus 6A, thereby enabling transmission and reception of data to be loaded and stored to peripheral I/O device 5 or data cache 3 by way of bus 6C or 6C-6B while transmitting instruction code on 6A and enabling parallel simultaneous transmission as in the known example.

In other words, the key point is to give due consideration to the method of arrangement of each device and the access frequency between each device, and then to dispose bus buffer circuits only at those portions that will provide the greatest effect. A still greater effect can be obtained by arranging bus buffer circuits not only between devices, but as necessary, within devices.

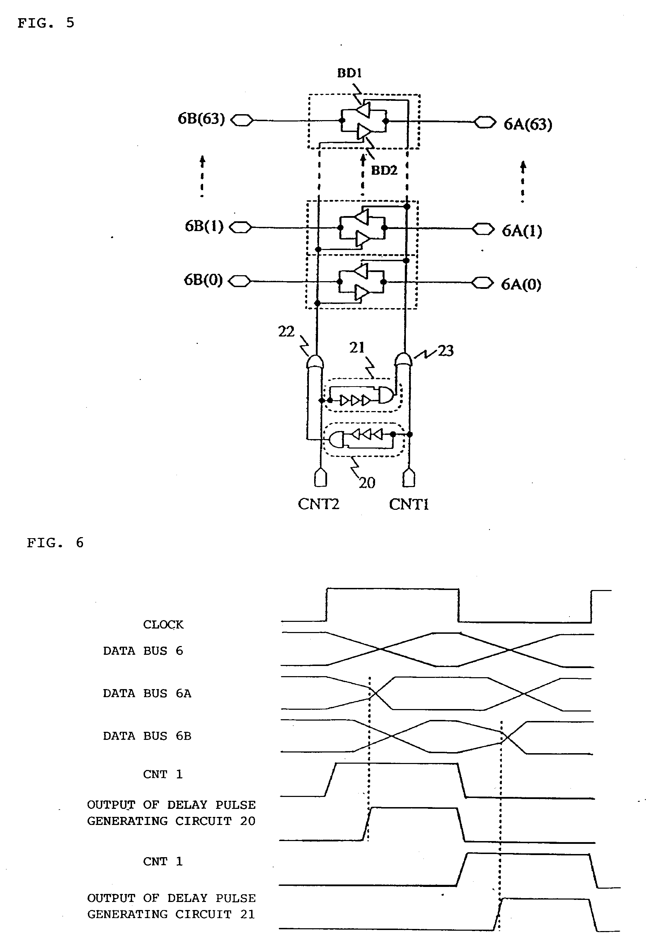

The construction and operation of bus buffer circuits 11, 12, and 13 will next be explained with reference to the accompanying figures. Fig. 5 is a circuit diagram of bus buffer circuit 11. Bus buffer circuit 11 includes bus drive circuits BD1 and BD2 for the wiring of bus 6A (64:0) and 6B(64:0) at its two ends. In addition, bus buffer circuit 11 inputs control signals CNT1 and CNT2 outputted from bus buffer control circuit 10. Bus buffer circuit 11 is further constructed such that CNT1 is inputted to delay pulse generating circuit 20, which inputs a greater delay on the rising edge of CNT1, the OR logic output of the output of delay pulse generating circuit 20 and CNT2 becoming the control signal of bus drive circuit BD2. Further, CNT2 is inputted to delay pulse generating circuit 21, which inputs a greater delay at the rising edge of CNT2, the OR logic output of the output of delay pulse generating circuit 21 and CNT1 becoming the control signal of bus drive circuit BD1.

Here, bus drive circuits BD1 and BD2 that make up bus buffer circuit 11 have greater drive capability than the bus drive circuits included by the devices on the side of bus 6A or the devices on the side of bus 6B. The plurality of bus drive circuits of each of the devices are connected to bus 6A and bus 6B. For example, in a case in which n bus drive circuits are connected on the side of bus 6A in addition to the bus buffer circuit, a reduction of the drive capability of these bus drive circuits, i.e., a reduction of the dimensions of the transistors making up the bus drive circuits, allows a reduction of the load capacity of bus 6A through the decrease in the dimensions of the n bus drive circuits. In contrast, only two bus drive circuits in the bus buffer circuit are connected at each end of bus 6A, and even if the drive capability is increased, the load capacity increases only to the extent of these two bus drive circuits.

Next, explanation will be given regarding the operation of bus buffer circuit 11 with reference to the timing chart of Fig. 6. When data are outputted from devices on the data bus 6A side and transmitted to devices on the data bus 6B side, CNT1 becomes high level, whereupon bus drive circuit BD1 becomes active. Thus, for example, when the level of data bus 6A switches from high level to low level, this change is transferred to data bus 6B by bus drive circuit BD1, and data bus 6B also begins to change from high level to low level.

The change of bus 6A at this time is gradual because the drive capability of the bus drive circuit, the device that drives bus A, is small. Moreover, BD2 is in an OFF state at this time. After the level of data bus 6B has dropped to some degree, the output of delay pulse circuit 20 becomes high level, whereupon bus drive circuit BD2 also becomes active, receives the level of data bus 6B, which has dropped somewhat in level, and outputs a low level on the data bus 6A side.

Bus 6A is thus driven by bus drive circuit BD2 in addition to the bus drive circuit of the device that drives bus 6A, and because bus drive circuit BD2 has a greater drive capability than the bus driver of the device that drives bus 6A, data bus 6A is rapidly pulled down to low level, and as a result, the change to low level in data buses 6A and 6B is fast. The result is similar even when the change of the data bus is from low level to high level. In a case in which output from devices on the side of data bus 6B is received by devices on the side of data bus 6A, similar operation takes place by a change of CNT 2 to high level. In a case in which CNT1 and CNT2 are both low level, bus buffer circuit 11 enters an OFF state. Operation is similar for bus buffer circuits 12 and 13. In this way, transmission of data is possible without a drop in speed even in cases in which a bus is divided into a plurality of sections and data are transmitted by way of bus buffers that can be opened and closed.

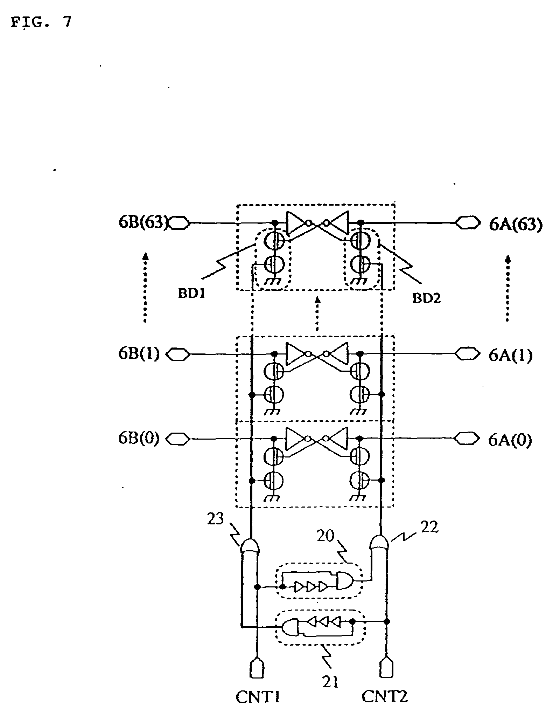

While Fig. 5 shows an embodiment of the bus buffer circuit for a case in which the bus is a static bus, Fig. 7 shows an embodiment of the bus buffer circuit for a case in which the bus is a dynamic bus. Bus drive circuits BD1 and BD2 are made up of two Nch transistors. In the case of a dynamic bus, since half-clocks are used in precharging of the bus, data that can be transmitted in one clock is of one type, but since the bus drive circuits of each device can be made up only of Nch transistors, the load capacity of the bus can be reduced and the frequency can be higher than in the case of a static bus.

In this example, a configuration was adopted having bus buffers only for the data bus, but in microcomputers having, for example, an address conversion capability, a similar effect may be obtained by means of a similar configuration for buses such as the address bus or other buses in which the volume of input and output is great, which have a heavy load, and which are wired over the entire chip.

As explained hereinabove, in cases in which a plurality of devices have input and output with respect to the same bus, the bus may be configured in loop form, and with consideration to the exchange of data between the devices, bus buffer circuits may be arranged at appropriate positions, wherein these bus buffer circuits are capable of electrically opening and closing the bus in accordance with at least two control signals, and wherein circuits that drive the bus at both ends in the data transmission direction are driven with a time differential; thereby maintaining the capability of parallel simultaneous transmission, which was an advantage of the known art, without bringing about a drop in transmission speed, which was the drawback of the known example, and moreover enabling driving of only the necessary portion of the loop-shaped bus wiring so as to bring about a reduction in power consumption. In addition, in cases of the prior art in which the bus was not divided, the dimensions of the bus drive circuits of all devices having output had to be increased in order to obtain the necessary bus speed, but in the present invention, division of the bus allows setting of the optimum dimensions with respect to the divided bus capacity, thereby allowing a reduction in the total capacity of the entire bus and a consequent reduction in power consumption.

It is to be understood, however, that although the characteristics and advantages of the present invention have been set forth in the foregoing description, the disclosure is illustrative only, and changes may be made in the arrangement of the parts within the scope of the appended claims.

## Claims

1. A semiconductor integrated circuit comprising:
a bus of loop configuration,
a central processing unit,
and a plurality of circuit functional blocks, among which an instruction cache is provided, the central processing unit and plurality of circuit functional blocks being connected to said bus of loop configuration,
wherein a bus buffer circuit that electrically connects said circuit functional blocks each other is provided to each bus other than the bus that connects by the shortest distance the instruction cache and central processing unit.

2. A semiconductor integrated circuit comprising:
a bus of loop configuration,
a central processing unit,
and a plurality of circuit functional blocks, the central processing unit and plurality of circuit functional blocks being connected to said bus of loop configuration,
wherein between circuit functional blocks other than between a portion of the circuit functional blocks, said bus is provided with bus buffer circuits that electrically connect together said circuit functional blocks.

3. A semiconductor integrated circuit according to claim 2 wherein said bus buffer circuits comprise a bus buffer circuit in the direction of data transmission and a bus buffer circuit in the direction opposite the direction of data transmission;
and said bus buffer circuit in the direction of data transmission opens a certain time difference before said bus buffer circuit in the direction opposite the direction of data transmission.

4. A semiconductor integrated circuit according to claim 2 wherein an instruction bus and a data bus that are connected to the central processing unit constitute said bus and are connected by way of bus buffer circuits.
